# EUROPEAN PATENT APPLICATION

(11) **EP 4 847 811 A1**
(43) Date of publication of application: **02.12.2026**
(21) Application number: 26181670.6
(22) Date of filing: 28.05.2026
(51) Int. Cl.: F16K 17/04, F02C 7/232, F16K 47/00

(54) **PRESSURE RELIEF VALVE AND FLUID HANDLING SYSTEM**

(30) Priority: 30.05.2025 GB 202508509
(71) Applicant: Airbus Operations Limited, Bristol BS34 7PA (GB)
(72) Inventor: BRANT, Alexander, Bristol BS34 7PA (GB)
(74) Representative: EIP

(57) **Abstract**

Disclosed is a pressure relief valve (100) having an inlet (101) and an outlet (102). The pressure relief valve has a valve mechanism that is movable between a closed state, at which the valve mechanism is configured to restrict a flow of fluid from the inlet to the outlet, and an open state, at which the valve mechanism is configured to restrict the flow of fluid from the inlet to the outlet to a lesser extent than when the valve mechanism is in the closed state. The pressure relief valve also has a spring-damper arrangement configured to control movement of the valve mechanism between the open state and the closed state.

## Description

### TECHNICAL FIELD

The present invention relates to pressure relief valves, fluid handling systems comprising pressure relief valves, and aircraft comprising fluid handling systems.

### BACKGROUND

Pressure relief valves are used to relieve pressure build-up in fluid systems. Typically, a pressure relief valve vents fluid from a fluid system to an external atmosphere, or to another system, when a pressure of the fluid in the fluid system meets or exceeds a set pressure of the pressure relief valve.

Check valves are examples of conventional pressure relief valves, which comprise a spring or other biasing member that holds a valve member against a valve seat until a force acting on the valve member, due to fluid pressure upstream of the check valve, exceeds a biasing force of the spring. At that point, the valve member moves away from the valve seat so that the fluid can flow through the check valve. When the force on the valve member due to fluid pressure drops below the biasing force of the spring, the spring urges the valve member back towards the valve seat to once again prevent fluid flow through the check valve.

### SUMMARY

A first aspect of the present invention provides a pressure relief valve comprising: an inlet and an outlet; a valve mechanism that is movable between a closed state, at which the valve mechanism is configured to restrict a flow of fluid from the inlet to the outlet, and an open state, at which the valve mechanism is configured to restrict the flow of fluid from the inlet to the outlet to a lesser extent than when the valve mechanism is in the closed state; and a spring-damper arrangement configured to control movement of the valve mechanism between the open state and the closed state.

By controlling the movement of the valve mechanism between the open state and the closed state, the spring-damper arrangement can provide a desired movement of the spring-damper arrangement between the open and closed states, and/or reduce a likelihood of undesired movements of the valve mechanism between the open and closed states. For instance, the spring-damper arrangement may slow a movement of the valve mechanism between the open state and the closed state compared to a pressure relief valve absent such a spring-damper arrangement. This may reduce a likelihood of the occurrence of "chatter", whereby the valve mechanism rapidly and repeatedly moves between the open state and the closed state. This may, in turn, provide a higher average flow rate through the pressure relief valve from the inlet to the outlet compared to a pressure relief valve absent the spring-damper arrangement. This may also result in a pressure relief valve that emits less noise and/or experiences a lower rate of wear than a pressure relief valve absent the spring-damper arrangement.

Optionally, when the valve is in the closed state, the valve mechanism is configured to prevent a flow of fluid from the inlet to the outlet. In this way, fluid may only be permitted to flow from the inlet to the outlet when the valve mechanism is moved away from the closed state, such as to the open state.

Optionally, the valve mechanism comprises a valve seat defining an opening through which the fluid is flowable between the inlet and the outlet. Optionally, the valve mechanism comprises a valve head movable along a valve axis between the closed state and the open state. Optionally, in the closed state, the valve head contacts the valve seat and restricts the opening. Optionally, in the open state, the valve head is away from the valve seat and restricts the opening to a lesser extent than when the valve head is in the closed state.

Optionally, the pressure relief valve is a pressure relief valve for an aircraft fluid system. Optionally, the pressure relief valve is for use in a hydrogen fluid handling system, such as a cryogenic liquid fluid handling system, for instance an aircraft hydrogen fuel system. In such a case, the fluid at the inlet may be hydrogen fuel, such as gaseous or liquid hydrogen fuel from a hydrogen fuel tank or fuel line of the hydrogen fuel system.

Optionally, the spring-damper arrangement is configured to control movement of the valve mechanism from the closed state to the open state. Optionally, the spring-damper arrangement is configured to control movement of the valve mechanism from the open state to the closed state. Optionally, the spring-damper arrangement is configured to restrict a rate of movement of the valve mechanism between the closed state and the open state, such as from the closed state to the open state, and/or from the open state to the closed state.

Optionally, the spring-damper arrangement is connected to the valve mechanism so as to control movement of the valve mechanism between the open state and the closed state. Optionally, the spring-damper arrangement comprises a bias arrangement configured to bias the valve mechanism towards the closed state, and to permit movement of the valve mechanism away from the closed state, towards the open state, when an inlet pressure of the fluid at the inlet meets or exceeds a threshold pressure.

In this way, the pressure relief valve may permit fluid to flow from the inlet to the outlet when the inlet pressure of the fluid meets or exceeds the threshold pressure, so as to restrict a further increase of pressure of the fluid at the inlet, or at a source of the fluid, above the threshold pressure. For instance, the fluid may be vented from such a fluid source via the pressure relief valve when the pressure of the fluid at the inlet exceeds the threshold pressure.

Optionally, the bias arrangement is configured to hold the valve mechanism in the closed state when the inlet pressure of the fluid is below the threshold pressure. In this way, the pressure relief valve may hinder, or prevent, a flow of the fluid from the inlet to the outlet when the pressure of the fluid at the inlet is below the threshold pressure. The pressure relief valve may thereby assist in maintaining a pressure of the fluid at the inlet, or at a source of the fluid, to a level below the threshold pressure, by permitting the fluid to flow from the inlet to the outlet when the inlet pressure exceeds the threshold pressure.

The bias arrangement may be configured, in particular, to bias the valve head, where provided, towards the closed state, such as towards the valve seat, where provided. The bias arrangement may be configured to hold the valve head in the closed state, such as to restrict the opening defined by the valve seat, where provided, when the pressure of the fluid at the inlet is below the threshold pressure. The bias arrangement may be configured to permit movement of the valve member away from the closed state, such as away from the valve seat, when the pressure of the fluid at the inlet meets or exceeds the threshold pressure. The bias arrangement may comprise a spring that biases the valve mechanism towards the closed state.

Optionally, the threshold pressure is a relative pressure between the inlet pressure and a reference pressure. Optionally, the bias arrangement is fluidically coupled to the inlet and to a region at the reference pressure, and is configured to permit movement of the valve mechanism away from the closed state, towards the open state, when a differential pressure, such as difference, or ratio, between the inlet pressure and the reference pressure exceeds the threshold pressure.

Optionally, the reference pressure is an outlet pressure at the outlet. For instance, the bias arrangement may be fluidically coupled to the outlet. Optionally, the outlet pressure is an atmospheric pressure external to the pressure relief valve, and/or external to a fluid system in which the pressure relief valve is installed. In such a case, an increase in the inlet pressure relative to the outlet pressure may occur due to a reduction in the outlet pressure, such as when the pressure relief valve increases in altitude. As such, operation of the bias arrangement may be affected by an external environment surrounding the pressure relief valve.

Optionally, the reference pressure is a vacuum. For instance, the pressure relief valve may comprise, or may be coupled to, a vacuum chamber, and the bias arrangement may be fluidically coupled to the vacuum chamber. In this way, the inlet pressure of the fluid may be an absolute pressure, and operation of the bias arrangement may be unaffected by changes in an atmosphere or environment surrounding the pressure relief valve.

Optionally, the spring-damper arrangement comprises a fluidic damper comprising a fluid chamber and a piston movable in the fluid chamber, wherein one of the fluid chamber and the piston is connected to, and movable with, the valve mechanism relative to the other of the fluid chamber and the piston. Optionally, the fluid chamber is configured to store a damper fluid, in use, so that the damper fluid resists a relative movement of the piston and the fluid chamber.

By resisting a relative movement of the piston and the fluid chamber, the damper fluid in the fluid chamber may reduce a speed at which the valve arrangement moves between the open and the closed states compared to a pressure relief valve absent the piston and fluid chamber, which may reduce the likelihood of the occurrence of chatter, as described above.

Optionally, the fluid chamber is configured to store a pressurised gas as the damper fluid. For instance, the fluid chamber may be a sealed chamber. Optionally, the piston divides the fluid chamber into a first region and a second region, and when the piston and fluid chamber move relative to each other, the volumes of the first and second regions may vary. When a pressurised gas is provided as the damper fluid in the first and/or the second region, this change in volume may result in pressure changes in the first and/or the second region that resist the relative motion of the piston and the fluid chamber. For instance, when the valve mechanism moves from the closed state to the open state, the first region, which comprises pressurised gas, may reduce in volume. The pressurised gas in the first region may increase in pressure, which may increase a force on the piston that resist motion of the valve mechanism from the closed state to the open state. This resistance to motion may reduce a likelihood of the occurrence of chatter, as described above.

Optionally, the fluid chamber contains the pressurised gas. Optionally, the pressurised gas is an inert gas, such as helium gas. Helium gas may be particularly useful where the pressure relief valve is a part of a hydrogen fluid handling system. For instance, the helium gas, being inert, may not react with hydrogen fuel in the event of a leak. Moreover, helium has a lower boiling point than hydrogen, and so may be less likely to condense when exposed to temperatures associated with cryogenic liquid hydrogen, such as when cryogenic liquid hydrogen is passing from the inlet to the outlet. This may result in more predictable behaviour of the pressure relief valve than if the damper fluid were to condense in the presence of cryogenic liquid hydrogen.

Optionally, when the spring-damper arrangement comprises the bias arrangement, the reference pressure is a pressure in the fluid chamber. For instance, the bias arrangement may be fluidically coupled to the inlet and the fluid chamber. Optionally, the pressure of the damper fluid in the fluid chamber, in use, is constant and known when the valve arrangement is in the closed state. In this way, the inlet pressure may be considered an absolute pressure, and operation of the bias arrangement may be unaffected by changes in an atmosphere or environment surrounding the pressure relief valve. By utilising a pressure in the fluid chamber as such, the benefits associated with the inlet pressure being an absolute pressure may be realised without requiring a vacuum chamber, and/or a connection to a vacuum chamber. That is, the fluid chamber may have a dual-use as a damper and a store of a reference pressure for operation of the bias arrangement.

Optionally, the fluid chamber is configured to store the damper fluid at a higher pressure than the threshold pressure, such as at a higher pressure than an anticipated pressure of the fluid at the inlet, in use. In such a case, the pressure of the damper fluid cannot be used as the reference pressure. However, an advantage of providing a damper fluid at a higher pressure than the fluid at the inlet is that, in the event of a leak between the fluid inlet and the fluid chamber, the damper fluid may leak towards the fluid at the inlet, or towards the fluid that is passing from the inlet to the outlet when the valve mechanism is in the open state, instead of this fluid leaking into the fluid chamber. This may reduce a likelihood of the fluid at the inlet, or the fluid flowing from the inlet to the outlet, passing into the fluid chamber and impacting operation of the spring-damper arrangement. This may be particularly advantageous when the pressure relief valve is installed in a hydrogen fluid handling system, whereby a leak of hydrogen fuel into the fluid chamber may cause the hydrogen fuel to heat up, expand, and increase a pressure in the fluid chamber. Alternatively, the fluid chamber may be configured to store the damper fluid at a pressure lower than the threshold pressure. In this way, the pressure of the damper fluid can be used as the reference pressure.

Optionally, the piston comprises a piston head having one or more apertures therethrough. Optionally, the one or more apertures extend through the piston head to fluidically connect a first region on one side of the piston head and a second region on an opposite side of the piston head. Optionally, a perimeter of the piston head is in slidable contact with an inner wall of the fluid chamber so that the piston head otherwise divides the fluid chamber into the first and second regions.

By providing the one or more apertures, the damper fluid may flow through the piston head, via the one or more apertures, as the piston head moves relative to the fluid chamber, in use. This may allow a pressure in the damper fluid at either side of the piston head to continuously tend towards equilibrium as the valve mechanism moves. The apertures restrict a flow rate of the damper fluid therethrough, which restricts a rate of equalisation of the pressure of the damper fluid at either side of the piston head. This may, in turn, allow the damper fluid to resist a relative movement of the valve mechanism from the closed state to the open state, as well as from the open state to the closed state.

For instance, movement of the valve mechanism from the closed state to the open state may cause a volume of the first region to decrease and a volume of the second region to increase. This may increase a pressure of the damper fluid in the first region and decrease a pressure of the damper fluid in the second region, so that the damper fluid in the first region is at a higher pressure than the damper fluid in the second region. This may exert a force on the piston head to resist the relative motion of the piston and the fluid chamber, and so resist movement of the valve mechanism towards the open state. Moreover, the pressure difference may cause the damper fluid in the first region to flow through the one or more apertures and into the second region, so that the pressures in the first and second regions gradually tend towards the same value. Movement of the valve mechanism from the open state towards the closed state may then reduce the volume of the second region and increase the volume of the first region, which may cause the pressure of the damper fluid in the second region to exceed the pressure of the damper fluid in the first region. This may result in a force on the piston head that resists a motion of the valve mechanism towards the closed state, and may cause the damper fluid to flow through the one or more apertures from the second region to the first region. This again may gradually equalise pressures between the first and second regions.

This bi-directional resistance to motion (both towards the open state and towards the closed state) may damp motion of the valve mechanism between these two states, reducing a likelihood of the occurrence of valve chatter, and so resulting in a greater period during which the valve is open. This may result in a greater average flow rate from the inlet to the outlet than when motion of the valve mechanism is not damped as such.

Optionally, the one or more apertures each have a diameter that is less than 1 mm, such as up to 0.5 mm, up to 0.4 mm, up to 0.3 mm, or up to 0.2 mm. Such sizes may suitably restrict a flow of helium gas therethrough. Smaller apertures may restrict the flow of damper fluid to a greater extent, which may further resist a relative motion of the piston and the fluid chamber, in use, which may in turn aid in the prevention of chatter. It will also be appreciated that any suitable number of apertures may be provided, such as up to 5, up to 8, up to 10, up to 15, up to 20, or greater than 20 apertures. Reducing a number of the apertures may increase a resistance to the relative motion of the piston and fluid chamber, in use.

Providing the perimeter of the piston head in slidable contact with the inner wall of the fluid chamber may restrict relative motion of the piston head and the fluid chamber to one direction. Providing the perimeter of the piston head in slidable contact with the inner wall of the fluid chamber may also reduce a likelihood of the damper fluid flowing between the inner wall and the piston head during relative movement of the piston and the fluid chamber. This may cause a majority or all of the damper fluid to flow instead through the one or more apertures, which may be sized to provide a specific damping effect. In this way, providing the perimeter of the piston head in slidable contact with the inner wall of the fluid chamber may result in more predictable behaviour of the spring-damper arrangement than when the perimeter of the piston head is not in slidable contact with the inner wall of the fluid chamber.

Optionally, the fluid chamber is fluidically connected, or fluidically connectable, to a source of the damper fluid. This may permit an adjustment of the amount of damper fluid in the fluid chamber, in use, such as to maintain a desired pressure of the damper fluid in the fluid chamber in the event of a leak of the damper fluid from the fluid chamber. The source of the damper fluid may be a pressurised source of the damper fluid. The pressure relief valve may comprise a source control valve that is operable to selectively permit and restrict a flow of the damper fluid from the source of the damper fluid to the fluid chamber, in use.

Optionally, the spring-damper arrangement is adjustable so as to adjust how the spring-damper arrangement controls movement of the valve mechanism between the open state and the closed state. This may provide a versatile pressure relief valve that is able to be adjusted for use with a particular fluid, and/or for use under particular conditions. For instance, the spring-damper arrangement may be adjustable so as to adjust the threshold pressure at or above which the biasing arrangement, where provided, permits movement of the valve mechanism towards the open state. For instance, a biasing effect of the biasing arrangement, such as a resilience of the spring, where provided, may be adjusted by increasing or decreasing a preload applied to the spring. This may be by the spring-damper arrangement comprising a member that is movable to adjust a level of compression of the spring.

Optionally the spring-damper arrangement is adjustable so as to adjust a parameter of the damper fluid in the fluid chamber, in use. The parameter may be a pressure of the damper fluid. For instance, where the inlet pressure of the fluid at the inlet is relative to a reference pressure in the fluid chamber, increasing or decreasing the pressure of the damper fluid in the fluid chamber may result in a corresponding increase or decrease in the absolute pressure of the fluid at the inlet that is required in order for the inlet pressure to exceed the threshold pressure.

Optionally the spring-damper arrangement comprises a volume adjuster, such as a volume adjustment piston, that is movable to increase or decrease a total volume of the fluid chamber, such as to adjust the pressure of the damper fluid in the fluid chamber. Optionally, where the fluid chamber is fluidically connected, or connectable, to the source of the damper fluid via the source control valve, the source control valve may be operable to selectively cause the damper fluid to pass from the source of the damper fluid to the fluid chamber, so as to increase a pressure in the fluid chamber. Optionally, the fluid chamber is connected, or connectable, to a valve vent through which the damper fluid is flowable from the fluid chamber to an environment external to the fluid chamber, such as external to the pressure relief valve. Optionally, the spring-damper arrangement comprises a vent control valve that is operable to cause the damper fluid to pass from the fluid chamber through the valve vent, so as to reduce a pressure in the fluid chamber.

A second aspect of the present invention provides a fluid handling system comprising a pressure relief valve according to the first aspect of the present invention, and a fluid flow path, wherein the inlet and the outlet of the pressure relief valve are each fluidically connected in the fluid flow path. By providing the pressure relief valve comprising the spring-damper arrangement, an occurrence of chatter in the fluid handling system may be reduced compared to a fluid handling system comprising a pressure relief valve absent a spring-damper arrangement. In this way, providing the pressure relief valve according to the first aspect of the present invention may provide a fluid handling system that has a higher average flow rate, lower noise emissions, improved efficiency, and/or a lower rate of wear than a fluid handling system comprising a pressure relief valve absent the spring-damper arrangement.

Optionally, the fluid handling system comprises a further pressure relief valve fluidically connected in the fluid flow path in series with the pressure relief valve. Providing the further pressure relief valve in series with the pressure relief valve may improve a redundancy of the fluid handling system. For instance, in the event of a failure of one of the pressure relief valve and the further pressure relief valve, the other of the pressure relief valve and the further pressure relief valve may remain operational.

The further pressure relief valve may be of the same type, or of a different type, to the pressure relief valve. For instance, the further pressure relief valve may be a pressure relief valve of the first aspect of the present invention, or may be a pressure relief valve absent the spring-damper arrangement of the pressure relief valve of the first aspect of the present invention.

Normally, providing two pressure relief valves in series, where each pressure relief valve is absent the spring-damper arrangement of the pressure relief valve of the first aspect of the present invention, may lead to a system that is particularly susceptible to chatter. In particular, opening of the upstream pressure relief valve may cause a rapid increase in pressure observed at the downstream pressure relief valve, which may cause a rapid opening of the downstream pressure relief valve. The pressure in the system may then reduce rapidly as fluid is vented further downstream of the downstream pressure relief valve, resulting in one or both of the pressure relief valves opening and closing rapidly. This behaviour may be cyclic, with rapid and repeated opening and closing of one or both valves. Providing the pressure relief valve in accordance with the first aspect of the present invention, comprising the spring-damper arrangement, either upstream or downstream of the further pressure relief valve, may reduce a likelihood of chatter by reducing a rate at which the valve mechanism moves to the open state, and thereby a rate at which pressure is relieved in the system. The spring-damper arrangement may also reduce a rate of movement of the valve mechanism towards the closed state, reducing a rate of pressure drop in the system, and allowing more fluid to continue flowing through the pressure relief valve than if the valve mechanism moved to the closed state more rapidly. This may reduce a likelihood of chatter in both the pressure relief valve and in the further pressure relief valve, whether or not the further pressure relief valve comprises such a spring-damper arrangement.

Optionally, the flow path is a vent line of the fluid handling system, the vent line arranged to vent the fluid to an atmosphere external to the fluid handling system. In this way, the valve mechanism may be configured to move to the open state in the event of an overpressure in the fluid handling system, so as to vent the fluid to the atmosphere and reduce a pressure in the fluid handling system.

Optionally, the fluid handling system is a hydrogen fuel system. The hydrogen fuel system may be a hydrogen refuelling station, such as an aircraft hydrogen refuelling station.

Optionally, the hydrogen fuel system is an aircraft hydrogen fuel system. The pressure relief valve of the first aspect of the present invention may be particularly advantageous in an aircraft hydrogen fuel system. In such a case, two pressure relief valves may be provided in series in a vent line of the aircraft hydrogen fuel system, to reduce a likelihood of an oxygen-containing atmosphere external to the atmosphere entering the hydrogen fuel system. For instance, if a single pressure relief valve were to be provided, and if that valve were to malfunction and remain open during a flight, then a pressure in the hydrogen fuel system, such as in a hydrogen fuel tank of the hydrogen fuel system, may reduce to a level close to that of the external atmosphere. As the aircraft descends, the pressure of the external atmosphere may increase relative to the pressure in the hydrogen fuel system, which may cause the external atmosphere to flow into the hydrogen fuel system, which may still contain some hydrogen fuel. Providing two pressure relief valves in series may provide redundancy in the event of a failure of one of the valves, thereby improving safety. However, as discussed above, such an arrangement may be prone to chatter. Providing the pressure relief valve of the first aspect in series with a further pressure relief valve may provide the advantage of improved redundancy whilst also reducing a likelihood of the occurrence of chatter.

A third aspect of the present invention provides an aircraft comprising the fluid handling system of the second aspect of the present invention.

It will be appreciated that any one of the first to third aspects of the present invention may comprise any of the optional features of, and/or benefit from any of the advantages of, any other of the first to third aspects of the present invention.

### BRIEF DESCRIPTION OF THE DRAWINGS

Embodiments of the invention will now be described, by way of example only, with reference to the accompanying drawings, in which:
Figure 1 shows a schematic perspective view of an aircraft.
Figure 2 shows a schematic view of a hydrogen fuel system of the aircraft of Figure 1;
Figures 3 and 4 show schematic cutaway views of an example pressure relief valve of the hydrogen fuel system of Figure 2 in different respective states; and
Figure 5 shows a schematic view of a piston head of the pressure relief valve of Figures 3 and 4.

### DETAILED DESCRIPTION

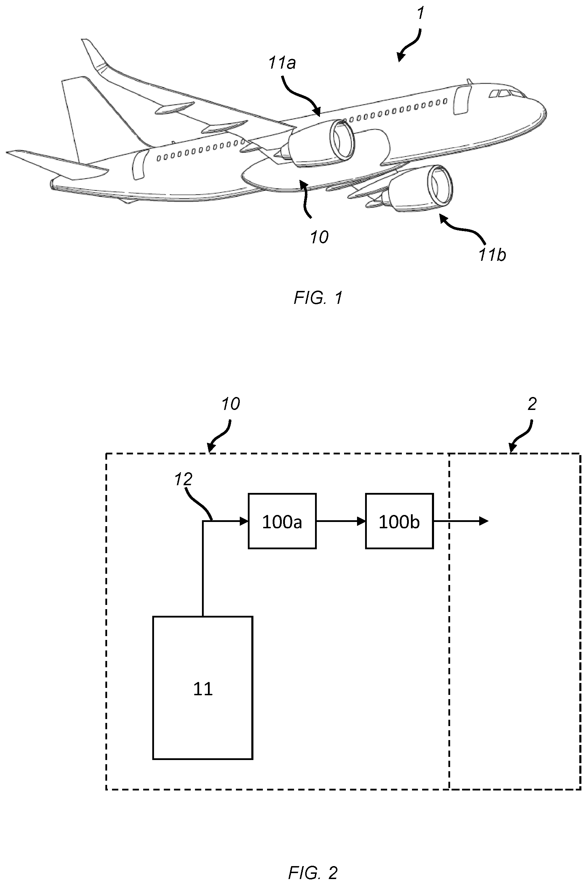

This description refers primarily to an aircraft 1, which is shown in Figure 1. The aircraft 1 comprises two wing-mounted thrusters 11a, 11b and a hydrogen fuel system 10. The hydrogen fuel system 10 stores hydrogen fuel and supplies the hydrogen fuel, in the form of cryogenic liquid hydrogen, to the thrusters 11a, 11b. The thrusters 11a, 11b combust the hydrogen fuel to produce thrust. In some other examples, the aircraft 1 comprises a fuel cell that is configured to generate electricity from the hydrogen fuel, and the thrusters 11a, 11b are instead powered by electricity from the fuel cell. Other arrangements are possible in other examples.

The hydrogen fuel system, as will be described below, comprises a pressure relief valve. It will be appreciated, however, that the pressure relief valve may, in other examples, be applied to systems other than an aircraft hydrogen fuel system. For instance, the pressure relief valve may be utilised in a non-hydrogen aircraft fuel system, a ground-based hydrogen fuel system (such as a hydrogen refuelling station), or any other suitable fluid handling system, such as a hydraulic or pneumatic control system. Other examples will be evident to the skilled person.

Figure 2 shows a schematic view of the hydrogen fuel system 10. The hydrogen fuel system 10 comprises a hydrogen fuel source 11, which here is a hydrogen fuel tank that stores hydrogen fuel for supply to the thrusters 11a, 11b. The hydrogen system 10 also comprises a fuel line and flow control components (not shown)that are arranged to transport fuel from the hydrogen fuel source 11 to one or both of the thrusters 11a, 11b. The hydrogen fuel system 10 comprises a vent line 12 fluidically connected at one end to the hydrogen fuel source 11 and at an opposite end to an atmosphere 2 external to the aircraft 1. The vent line 12 comprises a primary pressure relief valve (PRV) 100a and a secondary PRV 100b. The primary and secondary PRVs 100a, 100b are fluidically connected in series in the vent line 12, with the primary PRV 100a upstream of the secondary PRV 100b with respect to a flow of fluid from the hydrogen fuel source 11 to the atmosphere 2. In some examples, the vent line 12 is alternatively, or additionally, fluidically connected to the fuel line and/or flow control components of the hydrogen fuel system 10. In other examples, the vent line 12 is fluidically connected to a casing that encloses one or more components of the hydrogen fuel system 10. It will be appreciated that the vent line may, in various other examples, be fluidically connected to any other suitable component of the hydrogen fuel system 10.

This arrangement is particularly advantageous for an aircraft hydrogen fuel system 10. For instance, if just one PRV were to be provided in the vent line 12, then, should that PRV experience a loss of integrity when the aircraft is in flight, at altitude, hydrogen fuel may leak from the hydrogen fuel source 11 to the atmosphere 2 via the vent line 12, causing a reduction in pressure at the hydrogen fuel source 11. Upon reduction of altitude of the aircraft 1, a pressure in the atmosphere 2 may increase to a level above that in the hydrogen fuel source 11. This may cause oxygen-containing air in the atmosphere 2 to flow into the hydrogen fuel source 11, such as into the fuel line or hydrogen fuel tank of the aircraft 1, which may still contain residual hydrogen fuel. The oxygen in the air may react with the residual hydrogen fuel, posing a safety risk.

Providing the primary and the secondary PRVs 100a, 100b provides redundancy so that one of the primary and secondary PRVs 100a, 100b can provide pressure relief and prevent a backflow of air into components of the hydrogen fuel system 10, even in the event of a loss of the other of the primary and secondary PRVs 100a, 100b. However, such an arrangement may be particularly prone to "chatter" when conventional PRVs are used. For instance, the primary PRV 100a may "open", so that hydrogen fuel flows through the primary PRV 100a, leading to a release of pressure from the hydrogen fuel source 11 into a region between the primary and secondary PRVs 100a, 100b. However, at that point the secondary PRV 100b may still be closed, leading to a build-up of pressure in the vent line between the primary PRV 100a and the secondary PRV 100b. This build-up of pressure may cause the primary PRV 100a to "close" before the secondary PRV 100b has opened. The secondary PRV 100b may then open to release this pressure. The release of pressure may again cause the primary PRV 100a to open, but the secondary PRV 100b may close before pressure in the vent line between the primary and secondary PRVs 100a, 100b increases again to a sufficient extent to keep the secondary PRV 100b open. Thus, the primary and secondary PRVs 100a, 100b may repeatedly open and close, restricting an average flow rate of hydrogen fuel through the vent line and resulting in increased wear on the primary and secondary PRVs 100a, 100b. The primary PRV 100a in the present example, as will be described below, comprises a spring-damper arrangement that reduces a rate of opening and closing of the primary PRV 100a. This reduces a likelihood that the primary PRV 100a closes before the secondary PRV 100b opens, thereby reducing a likelihood of chatter occurring in the system.

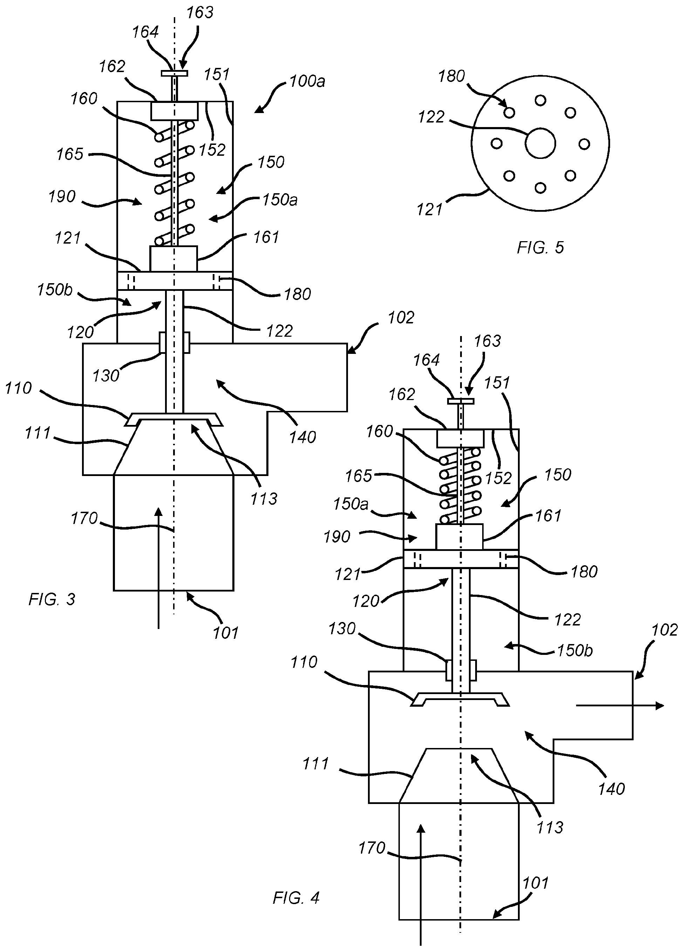

Figures 3 and 4 show schematic cutaway views of the primary PRV 100a in a "closed" state and an "open" state, respectively. The primary PRV 100a comprises an inlet 101, an outlet 102, a valve head 110, a valve seat 111, a piston 120 comprising a piston head 121 and a piston rod 122, a rod seal 130, a flow chamber 140, a damper chamber 150, a spring 160, a pair of spring supports 161, 162, and a spring adjustment screw 163.

The inlet 101 and the outlet 102 are each fluidically connected in the vent line 12, so that the inlet 101 receives hydrogen fuel from the hydrogen fuel source 11, and so that the outlet 102 supplies the hydrogen fuel to the secondary PRV 100b. The valve seat 111 defines an opening 113 through which hydrogen fuel can flow from the inlet 101 into the flow chamber 140, which is in turn fluidically connected to the outlet 102. The valve head 110 is located in the flow chamber 140. In the closed state shown in Figure 3, the valve head 110 is in a "closed position" and interfaces with the valve seat 111 to block the opening 113, thereby to prevent hydrogen fuel flowing through the opening 113. In the open state shown in Figure 4, the valve head 110 is in an "open position", away from the valve seat 111, so that hydrogen fuel can flow from the inlet 101 to the outlet 102 via the flow chamber 140 and the opening 113.

The piston head 121 is circular in cross-section when viewed along a valve axis 170 that is concentric with the piston head 121 and piston rod 122, as best shown in Figure 5. The piston head 121 comprises an array of holes 180 extending fully through the piston head 121 in the direction of the valve axis 170, again as best shown in Figure 5. The array of holes 180 here comprises eight holes arranged equally spaced apart in a circular array around the valve axis 170. In other examples, the array of holes 180 may comprise any other suitable number of holes, in any other suitable arrangement.

The damper chamber 150 is similarly circular in cross-section and concentric with the valve axis 170. A circumference of the piston head 121 is slidably engaged with an inner wall 151 of the damper chamber 150. In this way, the piston head 121 divides the damper chamber 150 into a first region 150a, located between the piston head 121 and an end wall 152 of the damper chamber 150, and a second region 150b, located between the piston head 121 and the valve head 110, on an opposite side of the piston head 121 to the end wall 152. The first and second regions 150a, 150b are fluidically connected to each other by the array of holes 180 in the piston head 121, but are otherwise separated from each other by the piston head 121.

The damper chamber 150 is fluidically isolated from the flow chamber 140 by the rod seal 130. The piston rod 122 extends through, and is slidably engaged with, the rod seal 130. The piston rod 122 is connected at one end to the valve head 110 and at an opposite end to the piston head 121. In this way, the valve head 110 is linearly movable along the valve axis 170 in the flow chamber 140, and the piston head 121 is linearly movable, in tandem with the valve head 110, along the valve axis 170 in the damper chamber 150.

The spring 160 is mounted in, and extends between, the pair of spring supports 161, 162, so that the pair of spring supports 161, 162 holds the spring 160 in a compressed state. The spring 160 extends helically around the valve axis 170, and the pair of spring supports 161, 162 are located at opposing ends of the spring 160 in the direction of the valve axis 170. In particular, a first one 161 of the pair of spring supports 161, 162 is mounted on the piston head 121, and a second one 162 of the pair of spring supports 161, 162 is mounted on the end wall 152 of the damper chamber 150.

The spring adjustment screw 163 comprises a screw head 164 located external to the damper chamber 150, and a stem 165 that extends away from the screw head 164, into the damper chamber 150, and which connects to each of the pair of spring supports 161, 162. The screw head 164 is rotatable, such as by an operator or a control system, to cause rotation of the screw stem 165. The screw stem 165, when rotated, moves the second one 162 of the pair of spring supports 161, 162 towards the first one 161 of the pair of spring supports 161, 162, to reduce a distance between the pair of spring supports 161, 162 in the direction of the valve axis 170. This, in turn, adjusts a level of compression of the spring 160, as will be described below.

Helium gas is stored under pressure in the damper chamber 150. The rod seal 130 prevents, or restricts, the helium gas from entering the flow chamber 140, and prevents, or restricts, hydrogen fuel entering the damper chamber 150 from the flow chamber 140.

Operation of the primary PRV 100a will now be described, with continued reference to Figures 3 to 5. The spring 160 is compressed by the pair of spring supports 161, 162, and so exerts respective forces on the pair of spring supports 161, 162. The spring supports 161, 162 are connected to the end wall 152 of the damper chamber 150 and the piston head 121 as described above. These forces urge the piston head 121 away from the end wall 152, and so urge the valve head 110 towards the valve seat 111. A pressure of a hydrogen fuel at the inlet 101 causes a force to be exerted on the valve head 110 that acts to move the piston head 121 towards the end wall 152, and so acts to further compress the spring 160.

When the force provided by the spring 160 on the valve head 110 is greater than the pressure of the hydrogen fuel at the inlet 101, the valve head 110 is held by the spring force in the "closed" position against the valve seat 111, to prevent the hydrogen fuel from flowing through the opening 113. When the pressure of the hydrogen fuel at the inlet 101 exceeds the force provided by the spring 160, the valve head 110 moves away from the valve seat 111 so that the hydrogen fuel can flow through the opening 113 and the flow chamber 140 towards the outlet 102.

When the valve head 110 moves away from the valve seat 111, the piston head 121 moves through the damper chamber 150 towards the end wall 152. Movement of the piston head 121 in this way causes the first region 150a to reduce in volume, and the second region 150b to increase in volume. This causes an initial increase in pressure of the helium gas in the first region 150a, and a decrease in pressure of the helium gas in the second region 150b. This pressure difference across the piston head 121 causes the helium gas to flow through the array of holes 180 from the first region 150a to the second region 150b. The array of holes 180 restricts a flow rate of the helium gas therethrough, and so a rate of equalisation of pressure in the first and second regions 150a, 150b is similarly restricted. This causes the pressure in the first region 150a to remain higher than the pressure in the second region 150b for a period of time after movement of the piston head 121 through the damper chamber 150. This elevated pressure in the first region 150a causes a force to be exerted on the piston head 121 that restricts a rate of movement of the piston head 121 towards the end wall 152, and so restricts movement of the valve head 110 from the closed position towards the open position. Eventually, a pressure in the first and second regions 150a, 150b may equalise, due to helium gas flowing through the array of holes 180. The valve may then be in the state shown in Figure 4.

A similar effect occurs when the valve head 110 moves from the open position to the closed position (i.e., from the state shown in Figure 4 to the state shown in Figure 3). In this case, movement of the valve head 110 towards the valve seat 111 causes the piston head 121 to move away from the end wall 152. This reduces a volume of the second region 150b and increases a volume of the first region 150a. This, in turn, causes the helium gas in the second region 150b to have a higher pressure than the helium gas in the first region 150a. Helium gas again flows through the array of holes 180, this time from the second region 150b to the first region 150a. The restriction of flow through the array of holes 180 results in a sustained increased pressure in the second region 150b, leading to a damping effect that restricts a rate of movement of the valve head 110 towards the closed position, in a similar way as described above.

It will be appreciated that the spring 160 provides a "spring" effect, which is a biasing force that continuously urges the valve head 110 in one direction, towards the closed position, whilst the piston head 121 and helium gas in the damper chamber 150 provide a "damping" effect, that slows movement of the valve head 110 in both directions between the open and closed positions. A combination of the spring 160, the piston head 121 and the damper chamber 150 may therefore be considered to be a part of a "spring-damper" arrangement 190 of the primary PRV 100a. The spring-damper arrangement 190 may be considered to comprise the helium gas in the damper chamber, as well as the piston rod 122, and the pair of spring supports 161, 162.

It will be appreciated that a set-point (or threshold) pressure of the hydrogen fuel at the inlet 101, at or above which the valve head 110 is caused to move against the spring force from the spring 160, can be adjusted by adjusting a level of compression of the spring 160 using the spring adjustment screw 163. For instance, decreasing a distance between the pair of spring supports 161, 162 increases a compression of the spring 160, and so increases an amount of the spring force that urges the valve head 110 towards the closed position. This causes a set-point pressure of the primary PRV to increase.

In the examples described above, the secondary PRV 100b is of the same type as the primary PRV 100a, but in other examples may be of any other suitable type (such as a conventional PRV). It is sufficient for only the primary PRV 100a to comprise the spring-damper arrangement 190 described above. Restricting a rate of movement of the valve head 110 in the primary PRV 100a between the open and closed positions allows the pressure in the vent line 12 between the primary and secondary PRVs 100a, 100b to build up to a level sufficient to open the secondary PRV 100b before the primary PRV 100a closes, thus reducing a likelihood of chatter, whether or not the secondary PRV 100b also comprises such a spring-damper arrangement 190.

In the present example, the set-point pressure of the fluid is a relative pressure between the pressure of hydrogen fuel at the inlet 101 and a pressure in the flow chamber 140, which is equal to the pressure at the outlet 102. Specifically, the force exerted on the valve head 110 by the hydrogen fuel at the inlet 101 is proportional to a differential pressure, such as a difference, or ratio, in pressure, acting on either side of the valve head 110. Thus, if the pressure at the outlet 102 decreases, for instance due to an increase in altitude of the aircraft 1 during a flight when the secondary PRV 100b is in the "open" state, a force on the valve head 110 towards the open position increases for the same absolute pressure of hydrogen fuel at the inlet 101.

The skilled person will understand that the specific shape and configuration of the primary PRV 100a may be different in other examples. For instance, the valve head 110, the valve seat 111 and the spring 160 may be arranged so that the spring 160 is pre-set with a tensile load. Such a spring 160 may generate a force that pulls the pair of spring supports 161, 162 towards each other, and so pulls the valve head 110 towards the valve seat 111. In some examples, the primary PRV 100a may be configured so that a pressure on one side of the valve head 110 is held constant. This may be by exposing one side of the valve head 110, opposite to the inlet 101, to a vacuum, or to the helium gas in the damper chamber 150, each of which may be at a constant, known pressure. This would ensure that the set-point pressure remains constant, regardless as to a pressure at the outlet 102. This may provide an "absolute pressure" primary PRV 100a.

The pressure of the helium gas in the damper chamber 150 is here higher than the set-point pressure. In this way, the helium gas remains at a higher pressure than the hydrogen fuel in the flow chamber 140 when the valve head 110 is in the open position. Thus, in the event of a leak across the rod seal 130, it would be more likely that helium gas, which is inert, would leak into the hydrogen fuel in the flow chamber 140, than for hydrogen fuel in the flow chamber 140 to leak into the damper chamber 150. Alternatively, the helium gas may be stored in the damper chamber 150 at a lower pressure than the set pressure, which may result in the hydrogen fuel in the flow chamber 140 being at a higher pressure than the helium gas. This may result in hydrogen fuel flowing into the damper chamber 150 in the event of a leak across the rod seal 130, but may also allow the helium gas to be used as a reference pressure acting on one side of the valve head 110 as described above.

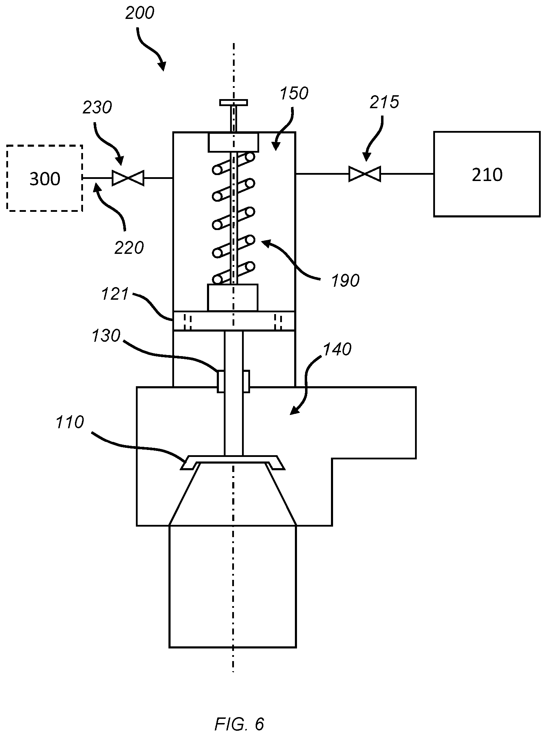

Figure 6 shows an example alternative PRV 200. The alternative PRV 200 is the same as the primary PRV 100a, except that the alternative PRV 200 comprises a helium source 210, a source valve 215, a chamber vent line 220 and a chamber vent valve 230. Like features of the alternative PRV 200 and the primary PRV 100a have been given like reference numerals.

The damper chamber 150 is fluidically connected to the helium source 210 by the source control valve 215. The helium source 210 is here a pressure vessel that is separate to the damper chamber 150 and stores pressurised helium gas at a pressure greater than a desired pressure in the damper chamber 150. The source control valve 215 is operable to selectively permit and restrict a flow of the helium gas from the helium source 210 to the damper chamber 150. This selectively causes an increase in the amount of damper fluid in the damper chamber 150, thereby increasing the pressure in the damper chamber 150. This may, for example, be to increase an amount of damping provided by the spring-damper arrangement 190. This may also, or alternatively, be to maintain a desired pressure of the helium gas in the damper chamber 150, for instance in the event of a leak of the damper fluid from the damper chamber 150 into the flow chamber 140 via the rod seal 130.

The chamber vent line 220 is fluidically connected between the damper chamber 150 and an external atmosphere 300 external to the damper chamber 150, and to the PRV 200 as a whole. The chamber vent valve 230 is fluidically connected in the chamber vent line 220, and is operable to cause damper fluid to pass from the damper chamber 150 through the chamber vent line 220 to the external atmosphere 300, to reduce a pressure in the damper chamber 150. This similarly permits an adjustment of pressure in the damper chamber 150, for instance to reduce an amount of damping provided by the spring-damper arrangement 190 by reducing an amount of helium gas flowing through the array of holes 180 on movement of the valve head 110 and piston head 121.

It is to be noted that the term "or" as used herein is to be interpreted to mean "and/or", unless expressly stated otherwise.

## Claims

1. A pressure relief valve comprising:
an inlet and an outlet;
a valve mechanism that is movable between a closed state, at which the valve mechanism is configured to restrict a flow of fluid from the inlet to the outlet, and an open state, at which the valve mechanism is configured to restrict the flow of fluid from the inlet to the outlet to a lesser extent than when the valve mechanism is in the closed state; and
a spring-damper arrangement configured to control movement of the valve mechanism between the open state and the closed state.

2. The pressure relief valve of claim 1, wherein the spring-damper arrangement comprises a bias arrangement configured to bias the valve mechanism towards the closed state, and to permit movement of the valve mechanism away from the closed state, towards the open state, when an inlet pressure of the fluid at the inlet meets or exceeds a threshold pressure.

3. The pressure relief valve of claim 1 or claim 2, wherein the spring-damper arrangement comprises a fluidic damper comprising a fluid chamber and a piston movable in the fluid chamber, wherein one of the fluid chamber and the piston is connected to, and movable with, the valve mechanism relative to the other of the fluid chamber and the piston,
wherein the fluid chamber is configured to store a damper fluid, in use, so that the damper fluid resists a relative movement of the piston and the fluid chamber.

4. The pressure relief valve of claim 3, wherein the fluid chamber is configured to store a pressurised gas as the damper fluid.

5. The pressure relief valve of claim 3 or claim 4, when dependent upon claim 2, wherein the fluid chamber is configured to store the damper fluid at a higher pressure than the threshold pressure.

6. The pressure relief valve of any one of claims 3 to 5, wherein the piston comprises a piston head having one or more apertures therethrough, wherein the one or more apertures extend through the piston head to fluidically connect a first region on one side of the piston head and a second region on an opposite side of the piston head, and wherein a perimeter of the piston head is in slidable contact with an inner wall of the fluid chamber so that the piston head otherwise divides the fluid chamber into the first and second regions.

7. The pressure relief valve of claim 6, wherein the one or more apertures each have a diameter that is less than 1 mm.

8. The pressure relief valve of any one of claims 3 to 7, wherein the fluid chamber is fluidically connected, or fluidically connectable, to a source of the damper fluid;
optionally, wherein the pressure relief valve comprises a source control valve operable to selectively permit and restrict a flow of the damper fluid from the source of the damper fluid to the fluid chamber, in use.

9. The pressure relief valve of any one of claims 1 to 8, wherein the spring-damper arrangement is adjustable so as to adjust how the spring-damper arrangement controls movement of the valve mechanism between the open state and the closed state.

10. A fluid handling system comprising a pressure relief valve according to any one of claims 1 to 9, and a fluid flow path, wherein the inlet and the outlet of the pressure relief valve are each fluidically connected in the fluid flow path.

11. The fluid handling system of claim 10, comprising a further pressure relief valve fluidically connected in the fluid flow path in series with the pressure relief valve.

12. The fluid handling system of claim 10 or claim 11, wherein the flow path is a vent line of the fluid handling system, the vent line arranged to vent the fluid to an atmosphere external to the fluid handling system.

13. The fluid handling system of any one of claims 10 to 12, wherein the fluid handling system is a hydrogen fuel system.

14. The fluid handling system of claim 13, wherein the hydrogen fuel system is an aircraft hydrogen fuel system.

15. An aircraft comprising the fluid handling system of any one of claims 10 to 14.
